Europäisches Patentamt

European Patent Office

Office européen des brevets

Veröffentlichungsnummer: **0 367 725**

**A2**

# EUROPÄISCHE PATENTANMELDUNG

Anmeldenummer: **89810812.1**

Int. Cl.[5] **G07B 15/04**

Anmeldetag: **30.10.89**

Priorität: **02.11.88 CH 4078/88**

Veröffentlichungstag der Anmeldung:
**09.05.90 Patentblatt 90/19**

Benannte Vertragsstaaten:
**AT BE CH DE ES FR GB GR IT LI LU NL SE**

Anmelder: **Oberhänsli, Jürg**
**Haselrainstrasse 10**
**CH-5024 Küttigen(CH)**

Erfinder: **Oberhänsli, Jürg**
**Haselrainstrasse 10**
**CH-5024 Küttigen(CH)**
Erfinder: **Molinari, Manlio**
**Viale Natela Betelli, 48**
**I-Dalmine(IT)**

Vertreter: **Frauenknecht, Alois J. et al**
**c/o PPS Polyvalent Patent Service AG,**
**Mellingerstrasse 1**
**CH-5400 Baden(CH)**

Verfahren und Vorrichtung zur Erhöhung der Diebstahlsicherheit in gesicherten Parkanlagen.

Es wird ein Verfahren und eine Vorrichtung zur Diebstahlsicherheit in Parkanlagen vorgestellt.

Ein in eine Parkanlage einfahrendes Fahrzeug wird optisch und/oder physikalisch ein erstes Mal vermessen und die resultierenden Daten aufgezeichnet. Bei der Ausfahrt erfolgt eine zweite Messung. Durch einen Datenvergleich mit der ersten Messung wird die Freigabe des Fahrzeugs gesteuert. Die Charakterisierung der Daten erfolgt durch die Einfahrtszeit und das entsprechende Gate der Einfahrt. Bei einer zugelassenen Varianz der Daten wird nach der Ausfahrt der Datenspeicher gelöscht und steht für weitere Fahrzeuge zur Benutzung zur Verfügung.

Eine bevorzugte Vorrichtung basiert auf Videobildern (5,5' bzw. 6,6') und benutzt eine automatische Bildanalyse und eine Korrelation der Bildinformation in Verbindung mit einem Steuerrechner/Speicher (20).

Fig. 1

## Verfahren und Vorrichtung zur Erhöhung der Diebstahlsicherheit in gesicherten Parkanlagen

Die vorliegende Erfindung betrifft ein Verfahren zur Erhöhung der Diebstahlsicherheit in gesicherten Parkanlagen sowie eine Vorrichtung zur Durchführung des Verfahrens.

Es ist allgemein bekannt, dass vor allem in grösseren Parkhäusern und Parkanlagen vermehrt Autodiebstähle erfolgen. Oft wird mittels eines billigeren und/oder gestohlenen Fahrzeugs ein Einfahrtsticket erlangt, während das Parkhaus mit dem-selben Ticket aber mit einem wertvolleren Fahrzeug - unter Bezahlung einer Parkgebühr - verlassen wird.

Bekannt sind als Sicherungsmassnahmen Fernsehüberwachungen bei den Ein- und Ausgängen sowie periodische Kontrollen der einzelnen Parkebenen. Zudem werden in nicht öffentlichen Parkhäusern oft Schlüssel oder Personalausweise zur Eintrittssicherung verwendet.

Es hat sich gezeigt, dass die vorgenannten Massnahmen nicht genügen und eine Verbesserung der Sicherheit gegen Entwendung dringend notwendig ist.

Es ist daher Aufgabe der Erfindung, ein Verfahren und eine Vorrichtung zu schaffen, welche dem jeweiligen Fahrzeughalter nur die Ausfahrt mit seinem Fahrzeug gestattet.

Diese Aufgabe wird dadurch gelöst, dass in einem ersten Verfahrensschritt optische und/oder physikalische Daten des in die Parkanlage einfahrenden Fahrzeugs erfasst und optisch und/oder elektronisch oder elektromagnetisch gespeichert werden, und dass bei der versuchten Ausfahrt des Fahrzeugs, in einem zweiten Verfahrensschritt, die Daten des Fahrzeugs erneut erfasst und diese korreliert werden mit denjenigen bei der Einfahrt, und dass bei innerhalb einer vorgegebenen Varianz liegenden Daten die Ausfahrt freigegeben wird.

Das erfindungsgemässe Verfahren lässt eine automatische Kontrolle der Fahrzeuge zu; Überwachungspersonal muss erst dann einschreiten, wenn aus technischen und/oder anderen Gründen eine Ausfahrt nicht freigegeben wird. Zur Vermeidung einer Kooperation zwischen Autodieben und Überwachungspersonal lässt sich in einfacher Weise das individuelle Freigeben eines Fahrzeuges mit dem Namen des jeweils tätigen Personals automatisch archivieren.

Erfindungsgemäss lassen sich die Daten des Fahrzeugs auf dem jeweils gewünschten, erforderlichen Sicherheitsniveau speichern und abrufen. Der Abruf erfolgt entweder nur durch den Träger eines Einfahrtstickets und/oder durch individuelle weitere, beispielsweise persönliche Merkmale oder spezifische Codierungen. - Sämtliche abrufbaren Informationen können nur getrennt vom Fahrzeug, durch den Führer, bzw. einen von ihm autorisierten Stellvertreter, ausgelöst werden.

In nachfolgenden abhängigen Ansprüchen sind vorteilhafte Weiterbildungen der Erfindung beschrieben.

Das Einprägen einer laufenden Nummer bzw. eines Codes gemäss Anspruch 2 gibt die Möglichkeit, dass ein Fahrzeug durch einen zweiten Fahrer legal aus dem Parkhaus herausgefahren wird.

Eine besonders einfache Charakterisierung der gespeicherten Daten erfolgt unter der Zufahrtsbezeichnung z.B. Gate 1 etc. und der genauen Einfahrtszeit, vgl. Anspruch 3.

Der Einbezug eines vom Fahrzeugführer eingegebenen PIN-Codes, Anspruch 4, erhöht die Sicherheit des Systems.

Vorteilhaft ist auch die Verwendung einer Checkkarte, gemäss Anspruch 5, zur Charakterisierung der Daten des Fahrzeugs, da mit ihr auf einfachste Weise eine Überprüfung ihrer Gültigkeit und zudem eine Belastung der Parkgebühr erfolgen kann.

Mit Hilfe einer Mikroprozessorkarte lassen sich in einfacher Weise sämtliche erfassten Daten des Fahrzeugs speichern, Anspruch 6, so dass beispielsweise bei sehr grossen Parkanlagen einzelne, privilegierte Zugänge ohne optische und/oder physikalische Datenerfassung ausgestaltet sein können.

Eine weitere Ausführung, insbesondere bei Anlagen, welche zugleich der Zutrittssicherung dienen sollen, entsprechend Anspruch 7, können individuelle Merkmale des Fahrers in Verbindung mit den Daten des Fahrzeugs gespeichert und der Kontrolle zugeführt werden.

Zur Charakterisierung eines Fahrzeugs eignet sich bevorzugt eine Videokamera, gemäss Anspruch 8, welche im einfachsten Fall einen Bildvergleich zwischen dem einfahrenden und dem ausfahrenden Fahrzeug erlaubt.

Eine Automatisierung des Vorgangs erfolgt durch die Vorrichtung nach Anspruch 9. Das eigentliche Bild des Fahrzeugs wird hierbei nur bei einem Nichtfreigeben abgerufen.

Eine einfache und betriebssichere Anordnung besteht aus einer Matrix von Lichtschranken, welche ein Rasterbild des Fahrzeugs ergeben und nur wenig Speichervolumen beansprucht, vgl. Anspruch 10.

Eine höhere Informationsdichte ergeben Laserscanner oder Moirédetektoren, nach Anspruch 11, wobei deren Bildinformation dreidimensional sein kann und bis zur holografischen Bildspeicherung entwickelbar ist.

Die in Anspruch 12 erwähnten Metalldetektoren erweisen sich als vorteilhaft, insbesondere in Fällen wo mit stark verschmutzten Fahrzeugen zu rechnen ist.

Die Messung der ferromagnetischen Masse, gemäss Anspruch 13, kann in verschiedenster Weise erfolgen, beispielsweise durch ein vorgegebenes Magnetfeld und vor und neben dem Fahrzeug angeordneten Hallsonden bzw. Förstersonden.

Die in Anspruch 14 aufgeführte Vorrichtung ist vor allem dort vorzusehen, wo die Karosserie der Fahrzeuge sauber ist, d.h. dieses Kriterium wird in der Regel zu anderen Daten hinzugenommen.

Eine Weiterbildung gemäss Anspruch 15 erlaubt beispielsweise nach gesuchten Fahrzeugen zu fahnden und dient gleichzeitig zur Erhöhung der Systemsicherheit.

Aktive und/oder passive Signale können vom einfahrenden Fahrzeug erfasst werden und erlauben ebenfalls dieses zusätzlich zu charakterisieren und dienen damit ebenfalls der Systemsicherheit. - Dies sind im einfachsten Falle Strichcodeinformationen und in komplexeren Fällen Signalmuster, analog denjenigen in der Flugzeugerkennung.

Nachfolgend wird anhand von Zeichnungen ein Ausführungsbeispiel der Erfindung näher erläutert.

Es zeigen:

Fig. 1 ein Parkhaus mit optischen Fahrzeugerfassungsanlagen,

Fig. 2 die Prinzipdarstellung der Steuerung der Einfahrts-und Ausfahrtskontrolle und

Fig. 3 beispielsweise Merkmale zur Charakterisierung eines Fahrzeugs mittels Bildanalyse

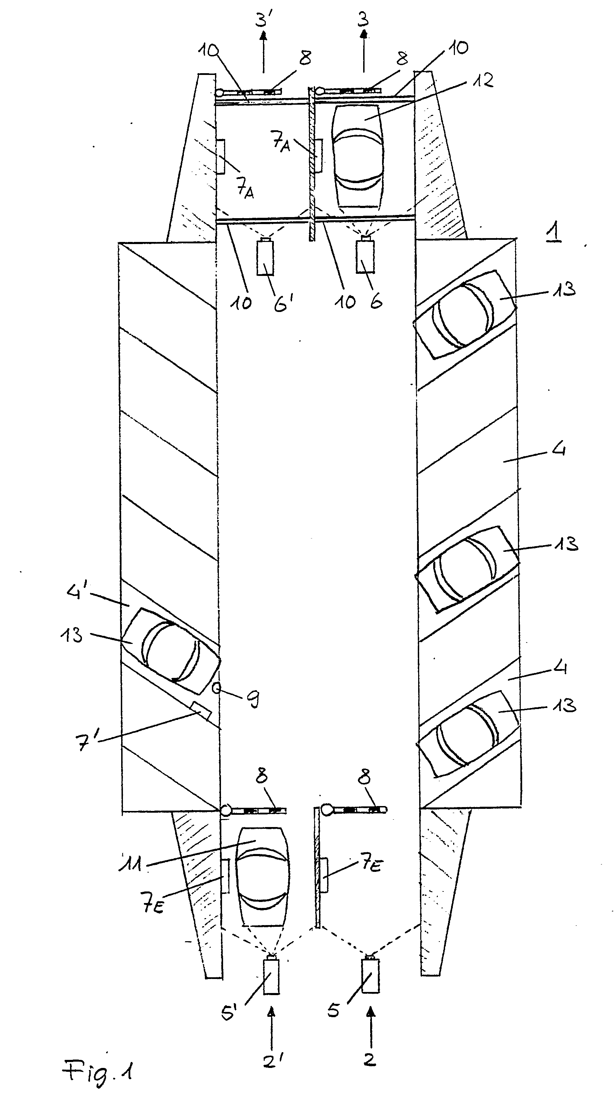

In Figur 1 ist eine Parkanlage, ein konventionelles Parkhaus 1, in einer Parkebene dargestellt.

Die Einfahrten 2 und 2' und die Ausfahrten 3 und 3' sind durch steuerbare Schranken 8 gesichert. Im Innern des Parkhauses befinden sich freie Parkfelder 4 und zumindest ausfahrgesicherte Parkfelder 4'.

Hinter einem durch die Einfahrt 2' (entspricht Gate 1) einfahrenden Fahrzeug befindet sich eine Videokamera 5'; ebenso bei der Einfahrt 2 (Gate 2). Hinter den Ausfahrten 3 und 3' befinden sich ebensolche Videokameras 6 und 6'.

In bekannter Weise - auf der Höhe des Fahrers - sind bei den Einfahrten Ticket/Ausgabe-Lesestationen $7_E$ und bei den Ausfahrten Lesestationen $7_A$ angeordnet; eine weitere Lesestation 7' befindet sich jeweils bei einem gesicherten Parkfeld 4', welche den Sperrriegel 9 steuert.

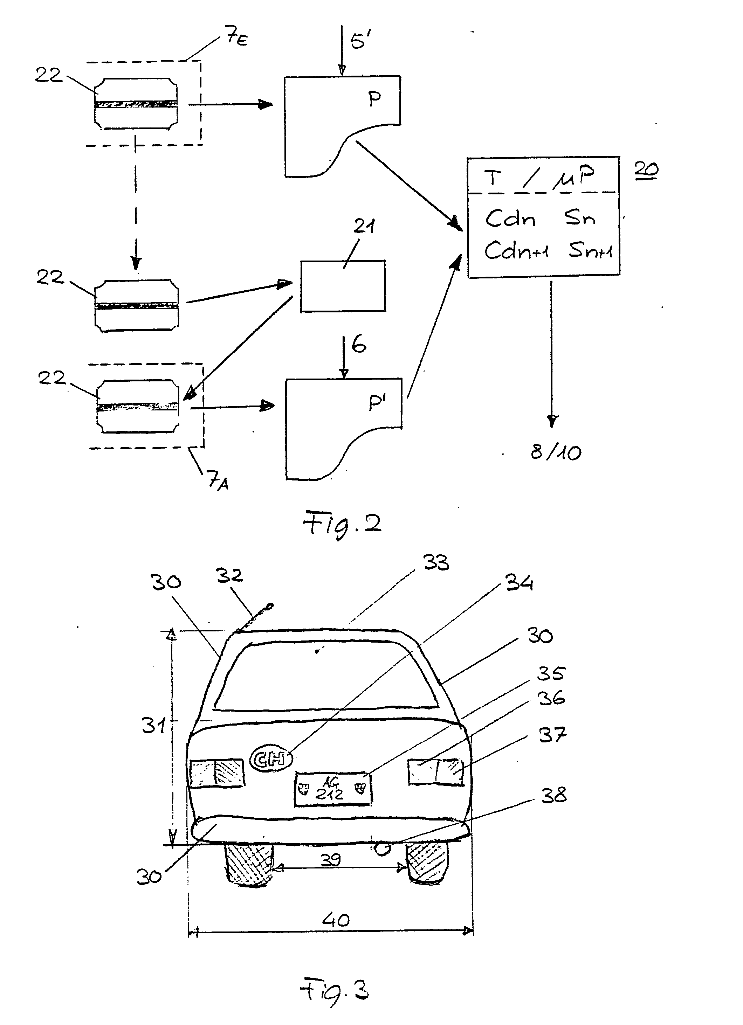

Das in Fig. 1 dargestellte Fahrzeug 11 wird bei seiner Einfahrt durch die Videokamera 5' aufgezeichnet. Sein Bild wird durch eine an sich bekannte Bildanalyse einerseits als Signaturprotokoll P, vgl. Fig. 2, und andererseits als reales Bild in einem Steuerrechner/Speicher 20 unter der Adresse Code Cdn und als zugeordneter Speicherinhalt Sn abgelegt.

Der Code Cdn enthält die von der Zeitbasis T gelieferte Einfahrtszeitinformation, zusammen mit Einfahrtsinformationen, hier Gate 1. Eingeschaltet wird die Videokamera 5' bei der Entnahme des Tickets 22 aus der Lesestation $7_E$, wobei vorgängig als einzige Information der Code Cdn auf das Tikket magnetisch geschrieben wurde.

Will nun der Fahrer sein Fahrzeug abholen, zahlt er nach dem Einschieben des Tickets 22 in die Kasse 21 die vom Rechner 20 errechnete Parkgebühr und fährt zu einer von ihm gewählten Ausfahrt, in Fig. 1 die Ausfahrt 3, und schiebt hier sein Ticket in die Lesestation $7_A$ ein. Nun wird die Videokamera 6 aktiviert, das Ergebnis der Bildanalyse, die Signatur wird im Rechner/Speicher 20 verglichen und entsprechend einer Korrelation und der vorgegebenen Varianz wird im Rechner 20 der Steuerbefehl zum Öffnen der entsprechende Schranke 8 gegeben.

Ist die Abweichung der beiden Signaturen grösser als erlaubt, fahren vor und hinter dem Fahrzeug 12 bisher versenkte Sperrschienen 10 aus und hindern das Fahrzeug vor einem Durchbrechen der Schranke 8 oder einem Rückwärtsfahren. Gleichzeitig wird ein Alarm ausgelöst und in einem nicht dargestellten Überwachungsraum erscheint das Videobild der Kamera 6 und das ebenfalls gespeicherte Bild von der Einfahrt (Kamera 5') wird abgerufen und von einer Überwachungsperson visuell verglichen. Entscheiden diese, dass die Ausfahrt freigegeben werden kann, so werden beide Bilder - unlöschbar - auf einer Videoplatte aufgezeichnet, zusammen mit den Personalien der Überwachungsperson. Ebenso werden Signatur-Einfahrt/Ausfahrts-Informationen gespeichert.

Ist dagegen die Signatur-Korrelation erfolgreich d.h. innerhalb der Varianzen verlaufen, so werden im Rechner-Speicher 20 der Code Cdn und die Signatur Sn gelöscht, ebenso das analog gespeicherte reale Videobild.

Automatische Bildanalysen sind als solche aus verschiedenen technischen Anwendungen bekannt; Fig. 3 zeigt wesentliche, ein Fahrzeug identifizierbar machende, Grössen auf:

Die Kontur 30 der Karosserie, die Höhe 31 der Karosserie, die Antenne 32, die Fensterfläche (Grösse) 33, ein individuelles Kennzeichen (Lage) 34, das Nummernschild (Typ) 35, das Bremslicht 36, das Rücklicht 37, der Auspuff (Lage) 38.

Trotzdem können zusätzlich Fahrer und/oder fahrzeugspezifische Daten mit aufgezeichnet und ebenfalls korreliert werden, wie beispielsweise spezielle Codes, persönliches Aussehen des Fahrers, seine Stimme oder die Farbe des Fahrzeugs etc.

Die anhand einer optischen Aufzeichnung geführten Betrachtungen lassen sich auf andere, auf verschiedensten physikalischen Messverfahren beruhende Aufzeichnung übertragen.

Beispielsweise kann die ferromagnetische Masse relativ genau bestimmt werden und stellt durch die Typenvielfalt der Fahrzeuge und der spezifischen Ausrüstung (Zusatzgeräte wie Nebellampen, Radios, Telefon etc.) ein gutes Individualisierungskriterium dar.

Mittels einer beispielsweise durch Laser- und oder Interferenzmessung realisierten Profilvermessung der vier Reifen kann eine sehr gute und einfach zu erzeugende Signatur eines Fahrzeugs erstellt werden. - Das unbeobachtete Umbauen von vier Rädern auf ein gleiches Fahrzeug erscheint sehr unwahrscheinlich.

Die Varianz der Messung kann mit Hilfe von einfachen statistischen Methoden erfolgen; Fehlmessung durch eingedrückte Steine oder verschmutzte Profile sind eliminierbar.

Selbstverständlich können die einzelnen Messverfahren miteinander beliebig kombiniert und dem jeweilen Stand der in Entwicklung befindlichen Messtechnik angepasst und laufend verbessert werden. Ebenso gilt dies für die Auswerte- und Korrelationsverfahren.

Ebenfalls können im Fahrzeug Signalgeneratoren oder Markierungen vorgesehen werden, welche in die Messverfahren integrierbar sind und die Realisierung einer hierarchisch geordneten Systemsicherheit erlauben.

## Bezeichnungsliste

1 Parkanlage (Parkhaus) 2,2' Einfahrt (Gate 1; Gate 2) 3,3' Ausfahrt 4 Parkfelder 4' gesicherte Parkfelder 5,5' Videokameras (Einfahrt) 6,6' Videokameras (Ausfahrt) 7' Lesestation (Parkfeld) 7$_E$ Ticket Ausgabe-Lesestation (Einfahrt) 7$_A$ Lesestation (Ausfahrt) 8 Schranken 9 Sperrriegel 10 Sperrschiene (versenkbar) 11 einfahrendes Fahrzeug 12 ausfahrendes Fahrzeug 13 parkierte Fahrzeuge 20 Steuerrechner/Speicher 21 Kasse 22 Ticket 30 Kontur der Karosserie 31 Höhe der Karosserie 32 Antenne 33 Fensterfläche (Grösse) 34 individuelles Kennzeichen (Lage) 35 Nummernschild (Typ) 36 Bremslicht 37 Rücklicht 38 Auspuff (Lage)

## Ansprüche

1. Verfahren zur Erhöhung der Diebstahlsicherheit in gesicherten Parkanlagen, dadurch gekennzeichnet, dass in einem ersten Verfahrensschritt optische und/oder physikalische Daten des in die Parkanlage einfahrenden Fahrzeugs erfasst und optisch und/oder elektronisch oder elektromagnetisch gespeichert werden, und dass bei der versuchten Ausfahrt des Fahrzeugs, in einem zweiten Verfahrensschritt, die Daten des Fahrzeugs erneut erfasst und diese korreliert werden mit denjenigen bei der Einfahrt, und dass bei innerhalb einer vorgegebenen Varianz liegenden Daten die Ausfahrt freigegeben wird.

2. Verfahren nach Anspruch 1, dadurch gekennzeichnet, dass die Daten des einfahrenden Fahrzeugs unter einem Code und/oder einer laufenden Nummer gespeichert werden, welche auf das Einfahrtsticket und/oder auf einen individuellen transportablen Datenträger geschrieben werden, und dass durch diese Information der Abruf der gespeicherten Daten bei der versuchten Ausfahrt angesteuert wird.

3. Verfahren nach Anspruch 1, dadurch gekennzeichnet, dass die Daten des einfahrenden Fahrzeugs unter einem Code, welcher die Einfahrtszeit und den Eingangsort des Fahrzeugs charakterisiert, gespeichert werden, welche auf das Einfahrtsticket und/oder auf einen individuellen transportablen Datenträger geschrieben wird, und dass durch diese Information der Abruf der gespeicherten Daten bei der versuchten Ausfahrt angesteuert wird.

4. Verfahren nach Anspruch 1, dadurch gekennzeichnet, dass die Daten des einfahrenden Fahrzeugs unter einem alphanumerischen Code gespeichert werden, welcher vom Fahr zeugführer gewählt ist und welcher auf das Einfahrtsticket und/oder auf einen individuellen transportablen Datenträger geschrieben oder gespeichert wird, und dass durch diese Information der Abruf der gespeicherten Daten des Fahrzeugs bei der versuchten Ausfahrt angesteuert wird.

5. Verfahren nach Anspruch 1, dadurch gekennzeichnet, dass die Daten des einfahrenden Fahrzeugs unter einem individuellen Code, welcher zumindest teilweise demjenigen einer Checkkarte entspricht, gespeichert werden, und dass durch diese Information der Abruf der gespeicherten Daten bei der versuchten Ausfahrt angesteuert wird.

6. Verfahren nach Anspruch 1, dadurch gekennzeichnet, dass die Daten des einfahrenden Fahrzeugs auf einen individuellen transportablen Datenträger geschrieben werden, und dass durch diese Information der Abruf der gespeicherten Daten bei der versuchten Ausfahrt angesteuert wird.

7. Verfahren nach Anspruch 1, dadurch gekennzeichnet, dass die Daten des einfahrenden Fahrzeugs zusammen mit individuellen Merkmalen des Fahrzeugsführers gespeichert werden, und dass durch diese Information der Abruf der gespeicherten Daten bei der versuchten Ausfahrt angesteuert wird.

8. Vorrichtung zur Durchführung des Verfahrens nach Anspruch 1, dadurch gekennzeichnet, dass wenigstens eine Video-kamera vorgesehen ist, welche das in die Parkanlage einfahrende Fahrzeug optisch erfasst und dass wenigstens ein Bildspeicher vorgesehen ist, welcher bei der Ausfahrt abrufbar ist.

9. Vorrichtung zur Durchführung des Verfahrens nach Anspruch 8, dadurch gekennzeichnet, dass wenigstens eine Videokamera vorgesehen ist, welche das in die Parkanlage einfahrende Fahrzeug optisch erfasst und dass wenigstens ein Bildanalysegerät vorgesehen ist, welches bei der Ausfahrt abrufbar ist.

10. Vorrichtung zur Durchführung des Verfahrens nach Anspruch 1, dadurch gekennzeichnet, dass wenigstens eine Anordnung von Lichtschranken vorgesehen ist, welche das in die Parkanlage einfahrende Fahrzeug optisch erfasst und dass wenigstens ein digitaler Speicher vorgesehen ist, welcher bei der Ausfahrt abrufbar ist.

11. Vorrichtung zur Durchführung des Verfahrens nach Anspruch 1, dadurch gekennzeichnet, dass wenigstens ein Laserscanner oder ein Moirédetektor vorgesehen ist, welcher das in die Parkanlage einfahrende Fahrzeug optisch dreidimensional erfasst und dass wenigstens ein Bildspeicher vorgesehen ist, welcher bei der Ausfahrt abrufbar ist.

12. Vorrichtung zur Durchführung des Verfahrens nach Anspruch 1, dadurch gekennzeichnet, dass wenigstens eine Anordnung mit Metalldetektoren vorgesehen ist, welche das in die Parkanlage einfahrende Fahrzeug in seinen Konturen erfasst und dass wenigstens ein digitaler Speicher vorgesehen ist, welcher bei der Ausfahrt abrufbar ist.

13. Vorrichtung zur Durchführung des Verfahrens nach Anspruch 1, dadurch gekennzeichnet, dass wenigstens ein Detektor zur Messung der ferromagnetischen Masse vorgesehen ist, welcher von dem in die Parkanlage einfahrenden Fahrzeug die magnetischen Daten bestimmt und dass wenigstens ein digitaler Speicher vorgesehen ist, von welchem bei der Ausfahrt diese Daten abrufbar sind.

14. Vorrichtung zur Durchführung des Verfahrens nach Anspruch 1, dadurch gekennzeichnet, dass wenigstens ein Farbdetektor vorgesehen ist, welcher das in die Parkanlage einfahrende Fahrzeug zumindest in seinen Farbwerten optisch erfasst und dass wenigstens ein digitaler Speicher vorgesehen ist, welcher bei der Ausfahrt abrufbar ist.

15. Vorrichtung zur Durchführung des Verfahrens nach Anspruch 8, dadurch gekennzeichnet, dass wenigstens eine Videokamera vorgesehen ist, welche das in die Parkanlage einfahrende Fahrzeug optisch erfasst und dass wenigstens ein Bildanalysegerät vorgesehen ist, welches das Kennzeichen des Fahrzeugs analysiert und dessen Informationen bei der Ausfahrt abrufbar sind.

16. Vorrichtung zur Durchführung des Verfahrens nach Anspruch 1, dadurch gekennzeichnet, dass wenigstens ein Signaldetektor vorgesehen ist, welcher von dem in die Parkanlage einfahrenden Fahrzeug ein Signal detektiert und/oder optische Merkmale erfasst und dass wenigstens ein Speicher vorgesehen ist, welcher bei der Ausfahrt ansteuerbar ist.

Fig. 1

Fig. 2

Fig. 3

13084 PPS/fk